# EUROPEAN PATENT APPLICATION

(11) **EP 4 270 175 A1**
(43) Date of publication of application: **01.11.2023**
(21) Application number: 21909805.0
(22) Date of filing: 24.08.2021
(51) Int. Cl.: G06F 8/30

(54) **INFORMATION PROCESSING DEVICE, INFORMATION PROCESSING SYSTEM, AND USER INTERFACE PROVIDING METHOD**

(30) Priority: 25.12.2020 JP 2020217716
(71) Applicant: Hitachi Industrial Equipment Systems Co., Ltd., Tokyo 101-0021 (JP)
(72) Inventor: YAMADA Hiroki, Tokyo 101-0021 (JP); FUJIOKA Takayoshi, Tokyo 101-0021 (JP); KIHARA Hajime, Tokyo 101-0021 (JP)
(74) Representative: MERH-IP Matias Erny Reichl Hoffmann Patentanwälte PartG mbB
(86) International application number: PCT/JP2021/031057
(87) International publication number: WO 2022/137647

(57) **Abstract**

This information processing device for executing applications holds, for each of the applications, a manifest file (user interface definition file) in which a user interface for the application is defined. The manifest file is designated with an attribute of data type for each item for defining a user interface object through which a setting item of the application is inputted/outputted. The information processing device generates the user interface object at which setting of the application is performed on the basis of the manifest file. Accordingly, for each of the applications, the user interface regarding setting of the application is unified, operability of a user is improved, and development efficiency of an application developer is improved.

## Description

### TECHNICAL FIELD

The present invention relevant to an information processing device, in particular, an information processing device preferable for providing a unified user interface even with respect to different application software.

### BACKGROUND ART

Recently, a case where a communication terminal such as a wireless router performs various processings such as primary processing for data or protocol conversion, as an edge device, has increased. Further, a firmware over the air (FOTA) technology of implementing the update/addition of application software (hereinafter, simply referred to as an "application") having a communication function has been established.

In such a case, the application to be used is different for each user, and even when the same application is modified to provide a different application, there is also a case where a slight function addition is performed. In addition, there are many cases where the application is developed by a plurality of people, and there is also a case where a developer not involved in the development of an information processing device designs only the function of the application. In the information processing device in which the application is daily updated and added as described above, it is extremely difficult to unify a user interface for the application. In addition, it is not efficient to change the user interface for each update. From such a background, a method for efficiently unifying the user interface for the application is required.

From the viewpoint of unifying the design of the user interface, for example, a technology of Patent Document 1 is proposed. In an information processing device described in Patent Document 1, in a case where a workflow processing unit executes a workflow, the design of a user interface that is commonly used by each function provider executing each step of the workflow is determined and designated to each function provider.

Accordingly, even in a case where a set of processings are executed by combining a plurality of extension programs in which the design of the user interface is not unified, the design of the user interface can be unified.

### CITATION LIST

### PATENT DOCUMENT

Patent Document 1: JP 2017-33235 A

### SUMMARY OF THE INVENTION

### PROBLEMS TO BE SOLVED BY THE INVENTION

There is a possibility that the processings of the applications are independent from each other and are not performed in cooperation, in accordance with a use application of the information processing device. In addition, in a case where a new staff develops a new application, it is more efficient to develop the new application by separating the function such that function cooperation with the existing application is sparse. According to Patent Document 1 described above, in the information processing device in which the applications do not cooperate with each other, the design of the user interface is different for each application, and there is a concern that the manipulation of the user is inhibited. In addition, in a case where the generation of the same user interface as that of the other application is requested from the developer in order to unity the design of the user interface, there is a concern that a development efficiency is degraded.

An object of the present invention is to provide an information processing device that is capable of unifying a user interface regarding the setting of an application, for each application, of improving the operability of a user, and of improving a development efficiency of an application developer.

### SOLUTIONS TO PROBLEMS

The configuration of an information processing device of the present invention, preferably, is an information processing device for executing application software, the information processing device holding a user interface definition file in which a user interface for the application software is defined, for each application software, in which the user interface definition file is designated with an attribute of a data type for each item for defining user interface object through which a setting item of the application software is inputted/outputted, and the information processing device generates the user interface object at which setting of the application software is performed on the basis of the user interface definition file.

### EFFECTS OF THE INVENTION

According to the present invention, it is possible to provide an information processing device that is capable of unifying the user interface regarding the setting of the application, for each application, of improving the operability of a user, and of improving a development efficiency of an application developer.

### BRIEF DESCRIPTION OF THE DRAWINGS

Fig. 1 is a function configuration diagram of an information processing device according to Embodiment 1.
Fig. 2 is a hardware/software configuration diagram of the information processing device according to Embodiment 1.
Fig. 3 is a diagram illustrating an example of a manifest file according to Embodiment 1.
Fig. 4A is a diagram illustrating an example of an application selection menu screen that is displayed by the information processing device according to Embodiment 1.
Fig. 4B is a diagram illustrating an example of an application setting screen that is displayed by the information processing device according to Embodiment 1.
Fig. 5 is a diagram illustrating an example of a CUI according to the information processing device.
Fig. 6 is a diagram illustrating an example of a manifest file according to Embodiment 2.
Fig. 7A is a diagram illustrating an example of an application selection menu screen that is displayed by an information processing device according to Embodiment 2.
Fig. 7B is a diagram illustrating an example of an application setting screen that is displayed by the information processing device according to Embodiment 2.
Fig. 8 is a diagram illustrating an example of a manifest file according to Embodiment 3.
Fig. 9 is a diagram illustrating an example of an application setting screen that is displayed by an information processing device according to Embodiment 3.
Fig. 10 is a diagram illustrating an example of a manifest file according to Embodiment 4.
Fig. 11 is a diagram illustrating an example of an application setting screen that is displayed by an information processing device according to Embodiment 4.
Fig. 12 is a function configuration diagram of an information processing system according to Embodiment 5.
Fig. 13 is a flowchart illustrating processing when a client sends a command for requesting the provision of a user interface to a user interface providing server.

### MODE FOR CARRYING OUT THE INVENTION

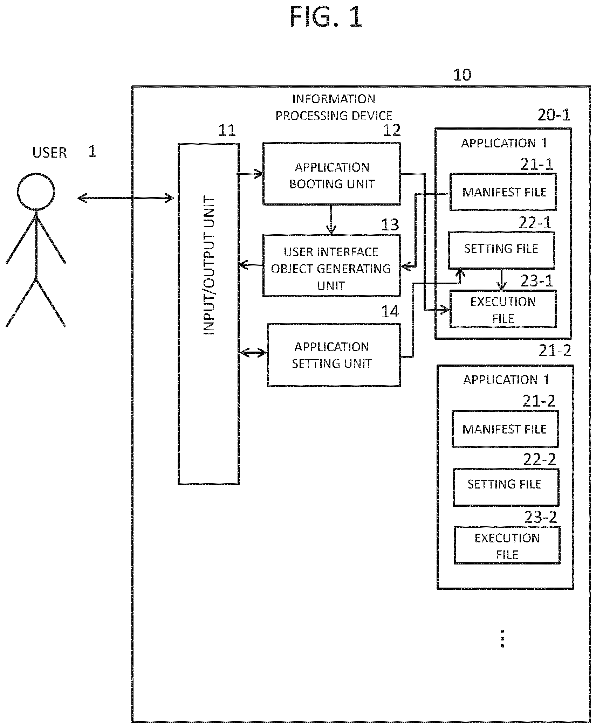

Hereinafter, each embodiment according to the present invention will be described by using Fig. 1 to Fig. 11.

The outline of the present invention is as follows.

An information processing device of the present invention holds a manifest file in which an element of an interface is defined, for each application. Then, a user interface object through which input/output with respect to a user is performed is generated with reference to the manifest file. The user interface object enables the user to visually recognize a display element or to input a command and data by a graphic user interface (GUI) and a character-based user interface (CUI).

Each application that is operated by the information processing device holds a setting file, a manifest file, and an execution file. Then, the application has a function of generating the user interface object from the manifest file.

The manifest file is described in a text (for example, Java script object notation (JSON) format that is visually easily to understand for humans. In the manifest file, an application ID, an ID, a name, a data type, a value range, and read-only setting of a setting/display item, and the like are described. In addition, a correspondence between an action name and the execution file, and an action trigger for executing an action are described. The action trigger, for example, is described in the form of being associated with a button on the GUI and of being booted in a case where the button is pressed.

In addition, the present invention can be applied to an information processing system including a' client and a server. In such a case, when a user interface according to a GUI is provided, the user interface is displayed at the time of accessing the information processing device from a LAN through a browser, and the setting/display item described in the manifest for each application is displayed as a menu. In addition, when a user interface according to a CUI is provided, exchange can be performed through a character string to be displayed by TCP connection with respect to the information processing device by using a designated TCP port number.

### [Embodiment 1]

Hereinafter, Embodiment 1 according to the present invention will be described by using Fig. 1 to Fig. 5.

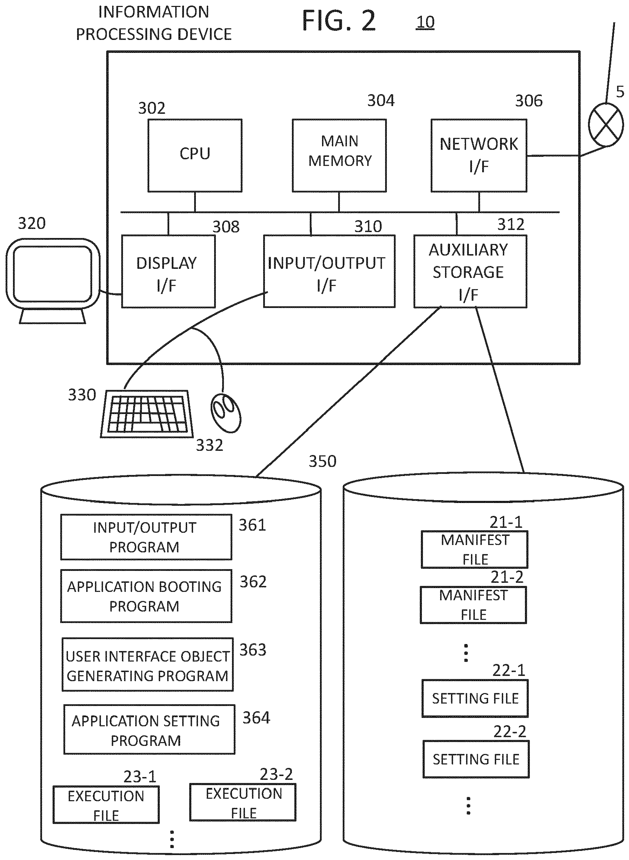

First, the configuration of an information processing device according to Embodiment 1 will be described by using Fig. 1 and Fig. 2.

The information processing device of this embodiment is a device that is designed to execute an application, and a user 1 manipulates a GUI or a CUI of an information processing device 10, and thus, acquires information from the information processing device 10, executes an application, or performs the setting of the application. An application 20 of the information processing device 10 is separated for each function that is attained by the information processing device. As an example, in the case of an information processing device having a function as a communication terminal, the application 20 is separated in unit such -as a router function, a serial communication function, and a protocol conversion function. As illustrated in Fig. 1, the information processing device of this embodiment includes each function unit,of an input/output unit 11, an application booting unit 12, a user interface object generating unit 13, and an application setting unit 14.

In addition, the information processing device of this embodiment is capable of executing a plurality of applications 20 (represented as 20-1, 20-2, ..., in Fig. 1), each of the applications 20 holds a manifest file 21 (represented as 21-1, 21-2, ..., in Fig. 1), a setting file 22 (represented as 22-1, 22-2, ..., in Fig. 1), and an execution file 23 (represented as 23-1, 23-2, ..., in Fig. 1).

The input/output unit 11 is a function unit that receives input from the user 1 or displays information of the information processing device 10 to the user. The application booting unit 12 is a function unit that boots the application or boots an application setting screen. The user interface object generating unit 13 is a function unit that generates a display/input/output element such as an object (a window or a text item, a command button, or the like to be displayed thereon, hereinafter, referred to as a "user interface object") for providing a user interface regarding the application 20 in accordance with the manifest file 21. The user interface that is provided to the user may be a GUI or a CUI. The application setting unit 14 is a function unit that performs setting for executing the application, in accordance with the input of the user.

The manifest file 21 is a file in which the specification of the user interface object for providing the user interface that is provided to the user, such as a GUI and a CUI, is defined (the details will be described below). The setting file 22 is a file in which a condition for executing the application 20 is described, a default setting value is described as an initial value, and a setting value is rewritten by the manipulation of the user through a GUI or a CUI. The setting file, for example, is a JSON format (the details will be described below) file in which a setting item and the value thereof are paired. The execution file 23 is a file for executing the processing of the application, and is a shell file or a listing format file.

Next, a hardware/software configuration of the information processing device 10 will be described by using Fig. 2.

The hardware configuration of the information processing device 10, for example, is attained by a general information processing device such as a personal computer illustrated in Fig. 2.

In the information processing device 10, a central processing unit (CPU) 302, a main memory 304, a network interface (I/F) 306, a display I/F 308, an input/output I/F 310, and an auxiliary storage I/F 312 are associated by a bus.

The CPU 302 controls each unit of the information processing device 10, and loads and executes a required program in the main memory 304.

The main memory 304, in general, includes a volatile memory such as a RAM, and stores the program that is executed by the CPU 302, and data that is referred to by the CPU 302.

The network I/F 306 is an interface for connecting with a network 5.

The display I/F 308 is an interface for connecting a display device 320 such as liquid crystal display (LCD).

The input/output I/F 310 is an interface for connecting an input/output device. In an example of Fig. 2, a keyboard 330 and a mouse 332 that is a pointing device are connected to the input/output I/F.

The auxiliary storage I/F 312 is an interface for connecting an auxiliary storage device such as a hard disk drive (HDD) 350 or a solid state drive (SSD).

The HDD 350 has high storage capacity, and stores a program for executing this embodiment. In the information processing device 10, an input/output program 361, an application booting program 362, a user interface object generating program 363, and an application setting program 364 are installed.

Each of the input/output program 361, the application booting program 362, the user interface object generating program 363, and the application setting program 364 is a program for attaining each function of the input/output unit 11, the application booting unit 12, the user interface object generating unit 13, and the application setting unit 14.

In addition, the HDD 350 stores the manifest file 21 (represented as 21-1, 21-2, ..., in Fig. 2), the setting file 22 (represented as 22-1, 22-2, ..., in Fig. 2), and the execution file 23 (represented as 23-1, 23-2, ..., in Fig. 2) .

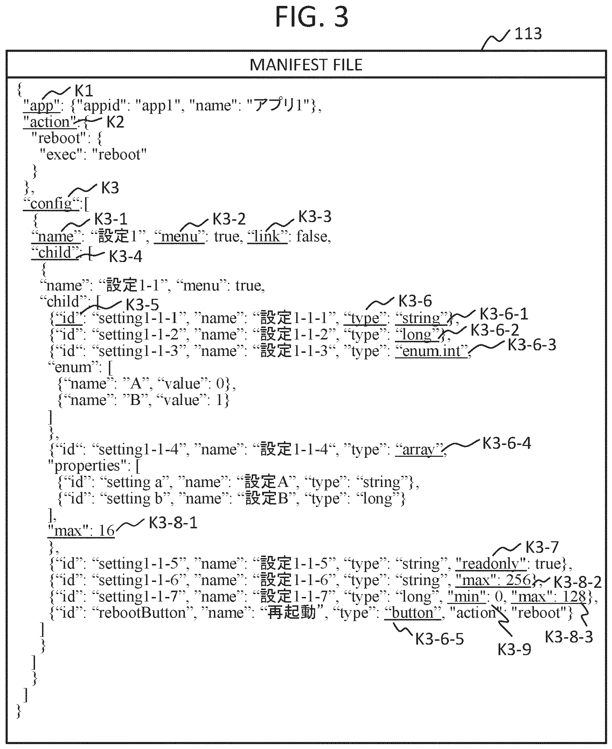

Next, a specific example of the manifest file in the Embodiment 1 will be described by using Fig. 3.

Fig. 3 is a diagram illustrating an example of the manifest file according to Embodiment 1.

The manifest file 21 is a file for defining a user interface regarding an application, or a user interface regarding an application. In this embodiment, an example is described in which the manifest file is described in a JSON format. The JSON format is a format in which a key and a value are separated by a colon in {}, as with {"key": "value" }. The user interface object generating unit 13 of the information processing device of this embodiment 10 generates a HTML file for expressing the user interface object, on the basis of the manifest file 21.

Hereinafter, each key described in the manifest file 21 will be described.

(K1) app key: An appid key and a name key are included. The appid key is a character string embedded in a URL that designates a setting screen for each application. For example, in a case where an IP address of the information processing device is 192.168.101.1, a URL of the application that is defined by this manifest file is "http://192.168.101.1/app1". The name key is a display name indicating the application 20 on an application selection menu screen.

(K2) action key: The action trigger for executing the execution file of the application 20 is registered. The action trigger is registered in the format of ""trigger name":{"exec":"execution file name"}". The registered trigger is executed in a case where a button designated on the manifest file 21 is pressed or a CLI command is inputted.

(K3) config key: The setting item of the application 20 is registered. The setting items can be set by being divided into a large item, a medium item, and a small item. By storing the setting item in the child key of each item, the setting item can be a child of the item, a child of the large item is the medium item, and a child of the medium item is the small item. The setting item can also be arranged in the lower layer of the small item.

Hereinafter, a setting key in each item of (K3) will be described.

(K3-1) name key: The name of the setting item is registered. The name key is used in the display name on the GUI.

(K3-2) menu key: In the setting screen for each application, the screen is divided, and thus, the left side is a menu screen, and the right side is a setting screen. In a case where the menu key is true, the setting item is displayed on the menu screen.

(K3-3) link key: It is determined whether or not to set a hyperlink in a character displayed on the menu screen. In the case of false, the link is not generated.

(K3-4) child key: The child of the item is created.

(K3-5) id key: The id of the setting item is determined. The id is called at the time of a CLI manipulation, and the value can be acquired and set.

(K3-6) type key: The type of setting item is designated. Input other than the designated type is rejected at the time of the setting input of each setting item.

Hereinafter, each type in (K3-6) will be described.

(K3-6-1) string type: The character string is designated.

(K3-6-2) long type: A 4-byte signed integer is designated. In addition, all types for designating a general numerical value as a numerical value, such as an int type, a float type, and a double type, can be designated.

(K3-6-3) enum type: An enumeration type is designated. The type of enumerated value can be designated by designating a type having "." after enum. In the example of Fig. 3, the int type is designated, and thus, a numerical value of the int type is designated in each name key (display name) as a valuie key.

(K3-6-4) array type: An array is designated. In the array, the content (the setting item) of the array can be designated by using a properties key. The setting item is similarly designated in the content of the array.

(K3-6-5) button type: A button is displayed on the GUI. In this type, the action key is set, and the trigger name designated by (K2) action key is set as a value, and thus, the execution file set in the action trigger is executed in a case where the button is pressed.

(K3-7) readonly key: In the case of true, the input of the user 1 with respect to the setting item is not received. The readonly key is used in a use application in which an internal variable of the application 20 that is not the setting item is displayed as with the setting item. The readonly key can also be used for debugging during the development by displaying the intermediate output of the processing.

(K3-8) max key: The meaning is changed in accordance with the content of the type key.

(K3-8-1) for array type: The maximum length of the array that can be inputted by the user 1 is set.

(K3-8-2) for string type: The maximum character string length that can be inputted is set.

(K3-8-3) for long type (valid in overall numerical value types): The range of the numerical value that can be inputted by the user 1 can be designated. The maximum value that can be inputted is designated by the max key.

(K3-9) min key: The range of the numerical value that can be inputted by the user 1 with the numerical value type can be designated. The minimum value that can be inputted is designated by the min key.

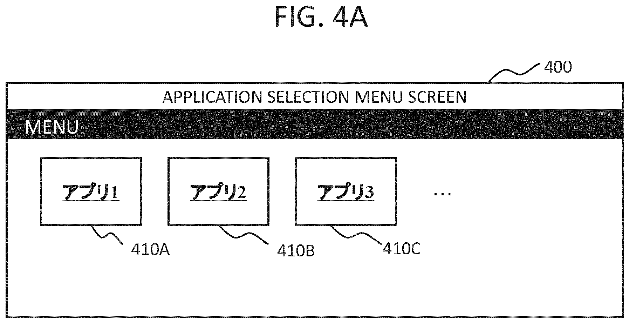

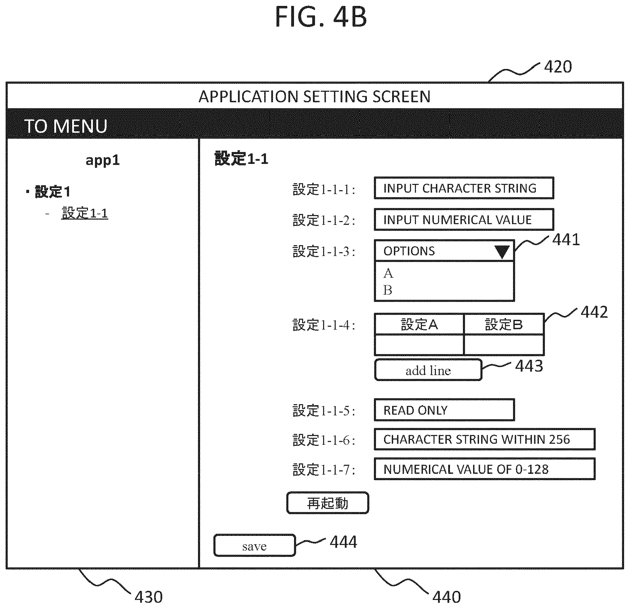

Next, the example of GUI that is provided by the manifest file in Embodiment 1 will be described by using Fig. 4A and Fig. 4B.

An application selection menu screen 400 illustrated in Fig. 4A is generated by reading the manifest file 21 of each application 20. The display name designated by (K1) is displayed in an icon 410 (represented as 410A, 410B, 410C..., in Fig. 4A), and is enumerated. In addition, by clicking the icon 410, it is possible to transition to the setting screen for each linked application including appid designated by (K1).

An application setting screen 420 illustrated in Fig. 4B is also generated by reading the manifest file 21 of each application 20.

The application setting unit 14 of the application 20 of the information processing device of this embodiment 10, on the basis of the value inputted to the application setting screen 420, reflects the value on the setting file.

A menu 430 is displayed on the left side of the screen, and a setting value input screen 440 is displayed on the right side. A link to the application selection menu screen 400 is displayed on the upper side of the screen. On the menu screen 430, an item in which (K3-2) menu key is set as true is displayed. On the setting value input screen 440, a setting item described in a manifest 113 is displayed. For an item 441 defined by the enum type, an option in which the set display name is enumerated is displayed by clicking an input box. For an item 442 defined by the array type, a setting value can be inputted in a table format. In addition, by pressing a line addition button 443, it is possible to add a line to the number of lines set by the max key. A setting save button 444 is a button for reflecting the inputted value and for rebooting the application. Until the setting save button 444 is pressed, the inputted setting value is not reflected.

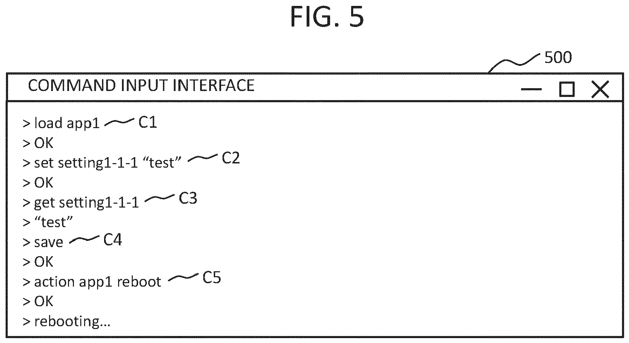

Next, the CUI that is provided by the manifest file will be described by using Fig. 5.

Fig. 5 is a diagram illustrating an example of a CUI according to the information processing device.

Hereinafter, a relationship between each command that is provided to the user by a CUI 500 and a description item of the manifest file 21 will be described.

(C1) load command: An application for acquiring/setting the setting value is designated. In a case where appid that exists is set to an argument, OK is displayed, and a transition to a setting mode for each application is performed. In a case where appid that does not exist is designated, NG is displayed. The load command is used even in the case of switching the application to be set.

(C2) set command: The setting value is inputted. By inputting the id of an item to be set as a first argument, and a value to be set as a second argument, OK is displayed, and the input of the setting value is completed. In a case where an id that does not exist is inputted, and in a case where an input value that is not suitable for the type is inputted, NG is only displayed.

(C3) get command: The setting value is checked. By designating the id of a setting value to be checked in an argument, the value is displayed. In a case where an id that does not exist is inputted, NG is only displayed.

(C4) save command: The inputted setting value is stored, and the application 20 in the setting mode is rebooted. In a case where it is not the setting mode for each application, NG is only displayed.

(C5) action command: The action is executed. By designating the appid in a first argument, and the action trigger name designated by the manifest file 21 for each application in a second argument, the execution file set in the action trigger is executed. In a case where appid or an action trigger name that does not exist is inputted, NG is only displayed.

As described above, according to this embodiment, in the application that is executed by the user and the setting of the application, a unified user interface is provided even to various applications by a developer only describing the manifest file. Accordingly, development effort with respect to the user interface of the developer of the application can be reduced.

### [Embodiment 2]

In Embodiment 1, each application and the application setting interface are unified by using the manifest file 21. However, in a case where the information processing device 10 is utilized overseas, a display language of the GUI is changed in accordance with the country, and thus, it is necessary to replace the manifest file 21. In response to this, in this embodiment, the item of the manifest file 21 is added to respond to many languages of the GUI.

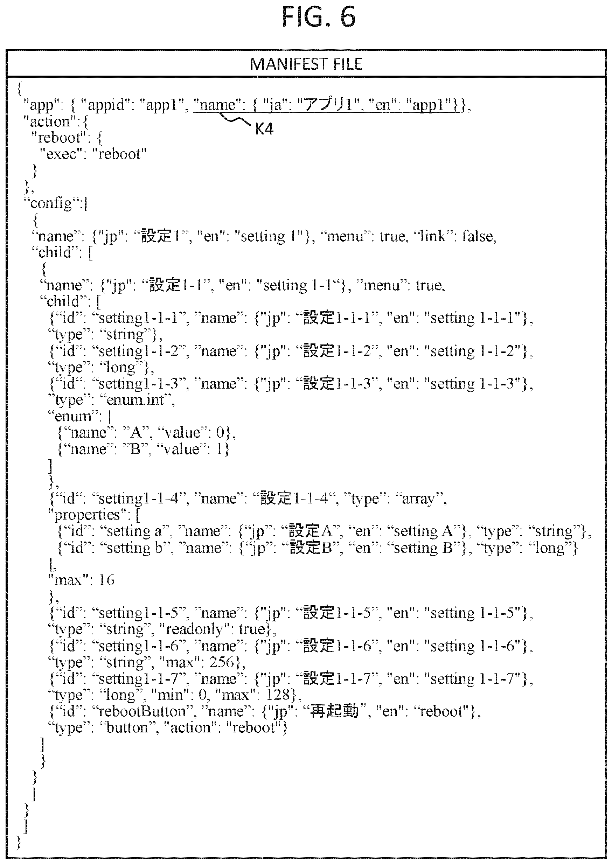

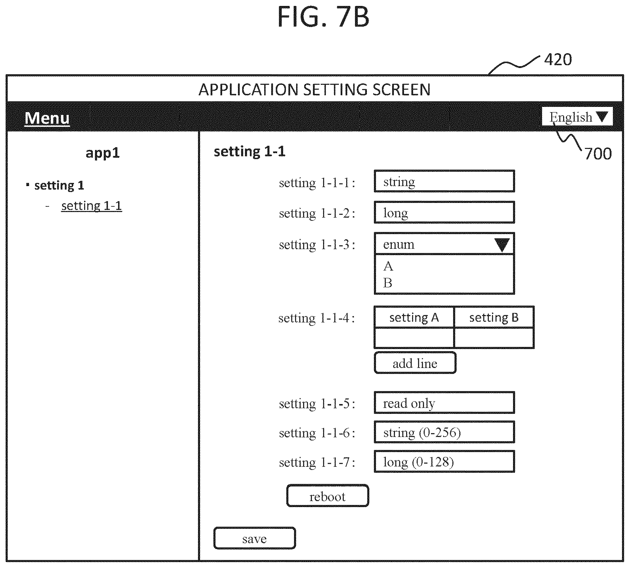

Hereinafter, Embodiment 2 will be described by using Fig. 6 and Fig. 7B, focusing on differences from Embodiment 1.

Here, a specific example of a manifest file in Embodiment 2 will be described by using Fig. 6.

Hereinafter, a key added to the manifest file 21 will be described.

(K4) name key: In Embodiment 2, a name is designated in a plurality of languages in the name key. The content of the name key is hierarchically described, compared to Embodiment 1, and in the case of a jp key, a Japanese name is described, and in the case of an en key, an English name is described. The jp key and the en key are an example, and the name key corresponds to various language keys such as a ch key of Chinese. The name key is common to all the setting items, and the same setting is performed in any setting item, and thus, a display mode of the GUI can be changed.,

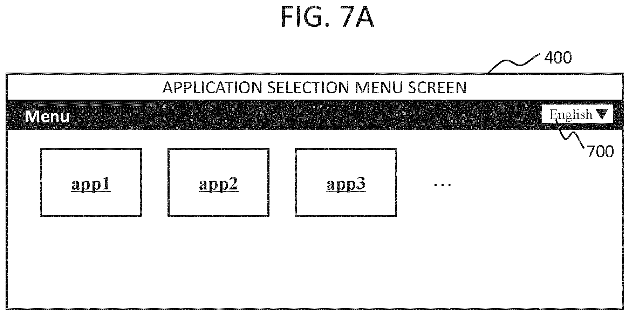

Next, an example of the GUI that is provided by the manifest file in Embodiment 2 will be described by using Fig. 7A and Fig. 7B.

The application selection menu screen 400 of Embodiment 2 is as illustrated in Fig. 7A. On the application selection menu screen 400, a language can be switched by a language selection tab 700. In Fig. 7A, the English name set by (K4) of Fig. 6 is reflected, and Apuri1 is switched to appl.

In addition, the application setting screen 420 of Embodiment 2 is as illustrated in Fig. 7B. As with the application selection menu screen illustrated in Fig. 7A, a language can be switched by the language selection tab 700. In Fig. 7B, the English name set by (K4) of Fig. 6 is reflected on the icon 410, and "Settei" is switched to "setting".

According to Embodiment 2, in the manifest file 21, by registering a plurality of languages in (K4) name key as a key and a value set, it is possible to switch the display language on the GUI by the language selection tab. Accordingly, in a case where the application is executed in different countries, it is possible to save many steps for replacing the manifest file 21.

### [Embodiment 3]

In Embodiment 1 and Embodiment 2, all the items described in the manifest file 21 are displayed on the GUI. However, the displayed content may be different in accordance with a situation of referring to the GUI or the CUI. For example, an intermediate output value or the like is outputted onto the screen at the time of development or a failure, and whether or not the processing is suitably preformed is determined. The intermediate output value is not originally displayed to the user, and thus, is generally hidden when used by the user. As described above, it is necessary to delete a debug item in the manifest file 21 in order to hide the information, for each situation of referring to the GUI or the GUI 500.

In this embodiment, in order to reduce such steps, the item of the manifest file 21 for switching the display/non-display of the setting item is added.

Hereinafter, Embodiment 3 will be described, focusing on differences from Embodiment 1 and Embodiment 2.

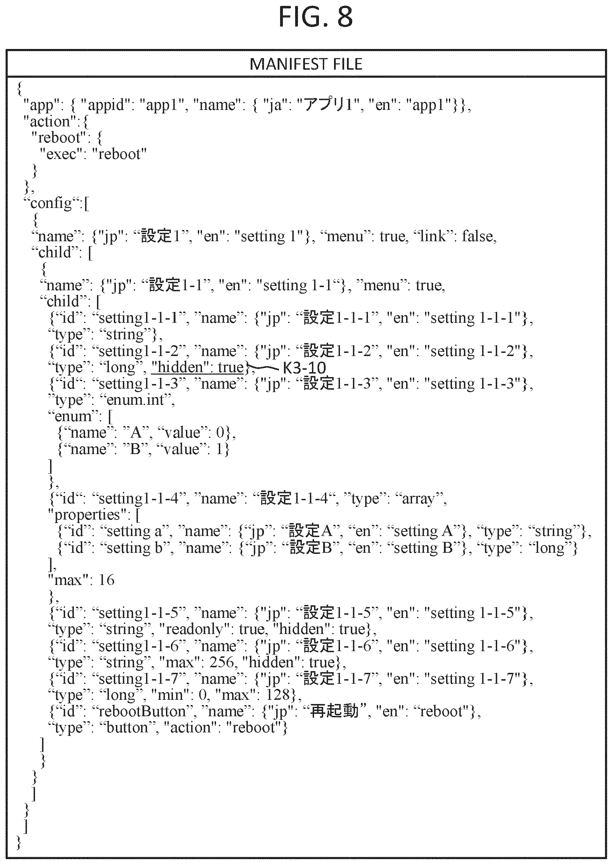

Here, a specific example of a manifest file in Embodiment 3 will be described by using Fig. 8.

Hereinafter, a key added to the manifest file 21 will be described.

(K3-10) hidden key: In the case of true, the setting item is not displayed on the GUI and the CUI.

In Fig. 8, in three items of setting 1-1-2, setting 1-1-5, and setting 1-1-6, (K3-10) hidden key is set as true and is set not to be displayed. In addition, in such a case, when appl is loaded on the CUI, and then, setting 1-1-2 is regarded as an argument by get or set, NG is only returned.

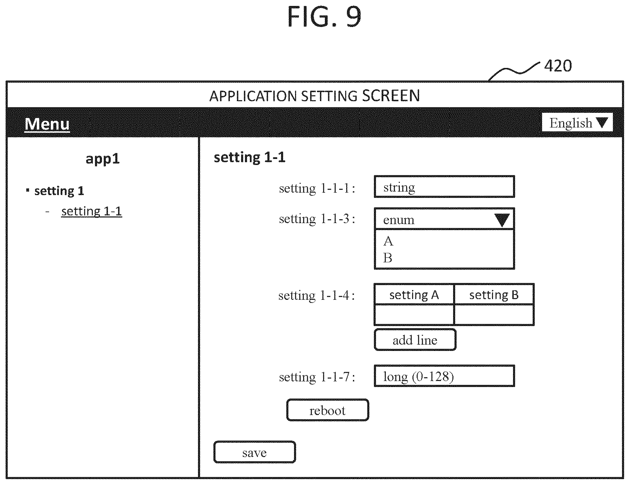

Next, an example of the GUI that is provided by the manifest file in Embodiment 3 will be described Fig. 9.

In the application setting screen 420 that is displayed in Embodiment 3, the setting item (setting 1-1-2, setting 1-1-5, and setting 1-1-6) in which (K3-10) hidden key is set as true is not displayed on the screen.

According to this embodiment, by setting (K3-10) hidden key as true in the manifest file 21, the set item is not displayed on the GUI or the CUI 500. Accordingly, the developer is capable of hiding an item that is outputted during debugging by slightly editing the manifest file 21.

### [Embodiment 4]

In Embodiment 1, Embodiment 2, and Embodiment 3, the display of the setting item or the execution of the execution file 23 is available on the interface by the description of the manifest file 21. However, in the execution of the execution file 23, in the case of including open source software (OSS), a license is required to be displayed. Even though it is possible to display license information by editing the manifest file 21, it is not the original function, and thus, there is a concern that the display collapses.

This embodiment relates to a user interface that displays the license on the GUI by embedding the license information in the manifest file 21, in consideration of a response to the OSS.

Hereinafter, Embodiment 4 will be described, focusing on differences from Embodiment 1 to Embodiment 3.

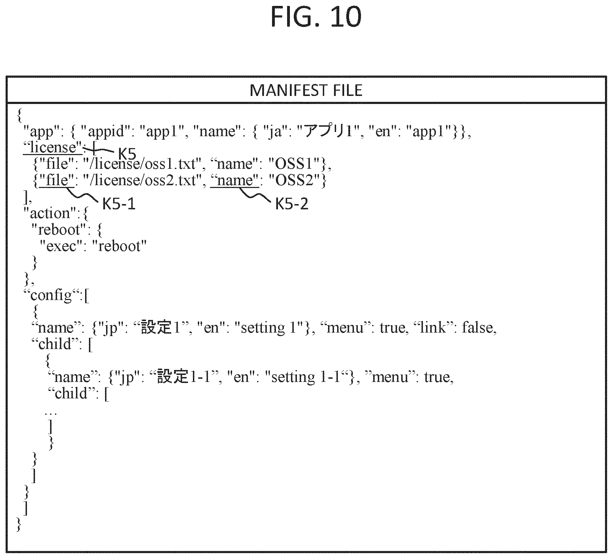

Here, a specific example of a manifest file in Embodiment 4 will be described by using Fig. 10.

Hereinafter, a key added to the manifest file 21 will be described.

(K5) license key: It is a key for designating license information.

Hereinafter, a key configuring (K5) will be described.

(K5-1) file key: The pass of a file in which the license information is described is designated. In the GUI, the file designated by the file key is returned as a HTTP response.

(K5-2) name key: The name of the OSS for displaying the license information on the GUI is designated.

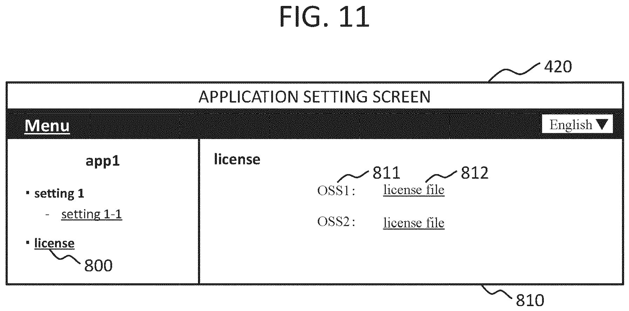

Next, an example of the GUI that is provided by the manifest file in Embodiment 4 will be described by using Fig. 11.

The application setting screen 420 that is displayed by an information processing device according to Embodiment 4 is as illustrated in Fig. 11. On the application setting screen 420, a link 800 to the license is added to the menu by adding (K5) license key. By clicking the link 800 to the license, license information 810 can be displayed on the right side of the screen. In the license information 810, a name 811 registered by (K5-2), and a character string 812 of a license . file in which a hyperlink to the file registered by (K5-1) is generated are displayed as a set.

According to this embodiment, by adding (K5) license key to the manifest file, a link page to the set license file of the OSS is automatically generated. Accordingly, when the developer utilizes the OSS, it is possible to display the license without directly editing the user interface.

### [Embodiment 5]

In Embodiment 1, an example is described in which in the information processing device 10, the user interface for the application is defined, and the execution of the application and the setting of the application are performed on the basis of the user interface.

In this embodiment, in an information processing system including a client and a server, information for defining the user interface for the application, and a function of generating the user interface object on the basis of the information are secured for the server side.

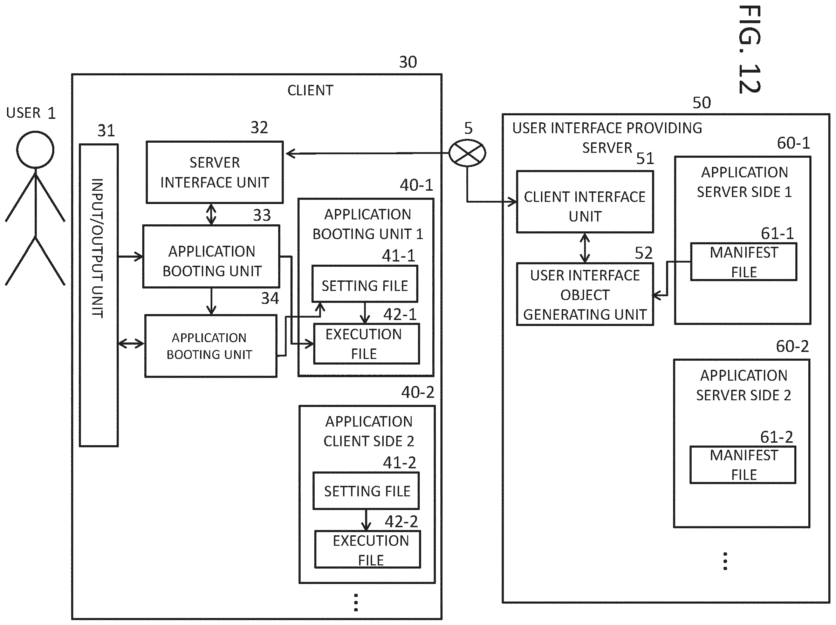

First, the configuration of the information processing system according to Embodiment 5 will be described' by using Fig. 12.

In an information processing system 3 of this embodiment, a client 30 and a user interface providing server 50 are connected by the network 5.

The client 30 is an information processing device that executes the application and requests the provision of the user interface from the user interface providing server 50 through the network 5.

Information relevant to the user interface is transmitted in accordance with the request from the user interface providing server 50.

The client 30 includes each function unit of an input/output unit 31, a server interface unit 32, an application booting unit 33, and an application setting unit 34.

In addition, an application client side 40 (represented as 40-1, 40-2, ..., in Fig. 12) of the client 30 holds a setting file 41 (represented as 41-1, 41-2, ..., in Fig. 12) and an execution file 42 (represented as 42-1, 42-2, ..., in Fig. 12). The setting file 41 and the execution file 42 are the same as the setting file 22 and the execution file 23 of Embodiment 1.

As with the information processing device 10 of Embodiment 1, the input/output unit 31 is a function unit that receives the input from the user 1 or displays the information of the information processing device 10. The server interface unit 32 is a function unit that manages a communication interface with the server. As with Embodiment 1, the application booting unit 33 is also a function unit that that boots the application or boots the application setting screen. In the case of the client 30 of this embodiment, when receiving the provision of the user interface, a command is sent to the user interface providing server 50 through the server interface unit 32, and information relevant to the user interface is received. As with Embodiment 1, the application setting unit 34 is also a function unit that performs the setting for executing the application, in accordance with the input of the user.

The user interface providing server 50 includes each function unit of a client interface unit 51 and a user interface object generating unit 52.

The client interface unit 51 is a function unit that manages a communication interface with the client. As with the information processing device 10 of Embodiment 1, the user interface object generating unit 52 is a function unit that generates a user interface object relevant to the application, in accordance with a manifest file 61. In this embodiment, information relevant to the user interface object is transmitted to the client 30 through the client interface unit 51.

The user interface providing server 50 holds a manifest file 61 (represented as 61-1, 61-2, ..., in Fig. 12) as an application server side 60 (represented as 60-1, 60-2, ..., in Fig. 12). The manifest file 61 is the same as the manifest file 21 of Embodiment 1.

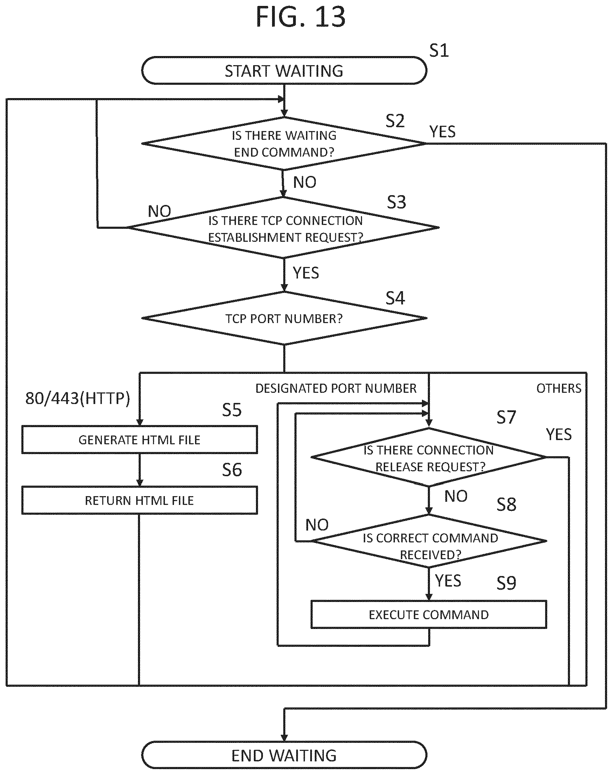

Next, processing when the client sends a command for requesting the provision of the user interface to the user interface providing server will be described by using Fig. 13.

In this embodiment, the client 30 and the user interface providing server 50 communicate with each other by a transmission protocol/internet protocol (TCP/IP).

(S1) Start waiting: The user interface providing server 50 starts the waiting for a request for generating TCP connection after communication initial setting with the client 30.

(S2) Is there waiting end command?: In a case where there is a command for stopping the information processing device 10, such as a rebooting command, through the GUI or the CUI (S2: YES), the processing ends. In the other case (S2: NO), the processing proceeds to (S3) .

(S3) Is there TCP connection establishment request?: In a case where there is a request for establishing TCP connection between the client 30 and the user interface providing server 50 through the network 5 (S3: YES), the processing proceeds to (S4). In the other case (S3: NO), the processing returns to (S2) .

(S4) TCP port number: The processing branches in accordance with a destination TCP port number for which connection establishment is requested. In the case of a port 80 or a port 443 that is used in hyper text transfer protocol (HTTP)/hyper text transfer protocol secure (HTTPS) (S4: 80/443 (HTTP)), the connection is established, and the processing proceeds to (S5). In the case of a designated port number that is set in advance (S4: Designated Port Number), the connection is established, and the processing proceeds to (S7). In the case of other port numbers (S4: Others), the processing returns to (S2).

(S5) Generate hyper text markup language (HTML) file: The user interface object generating unit 52 of the user interface providing server 50 reads the manifest file 61 held by the application server side 60, and generates the HTML file for expressing the user interface object. Any of the application selection menu screen and the setting screen for each application 0 is generated in accordance with a URL to be accessed.

(S6) Return HTML file: The HTML file generated in (S5) is returned as a HTTP response. After the HTML file is returned, the processing returns to (S2). In this case, the connection established in (S4) is released in accordance with the specification of the HTTP.

(S7) Is there connection release request?: In a case where there is a release request in the connection established in (S4) (S7: YES), the connection is released, and the processing returns to (S2). In the other case (S7: NO), the processing proceeds to (S8).

(S8) Is correct command received?: In a case where a correct command according to the specification of the command of the GUI is received through the connection established in (S4) (S8: YES), the processing proceeds to (S9). In the other case (S8: NO), the processing returns to (S7).

(S9) Execute command: The command received in (S8) is interpreted and executed. The content of the command in this processing is the acquisition of the information, the update/application of the setting value, and the like.

(S10) End waiting: The client interface unit 51 of the user interface providing server 50 ends the waiting for the TCP connection establishment request.

In this embodiment, the manifest file 51 is provided in the application server side 60, there is an advantage that management is easily performed, and the unified user interface can be provided to many clients executing the application.

### REFERENCE SIGNS LIST

- 1: User
- 10: Information processing device
- 11: Input/output unit
- 12: Application booting unit
- 13: User interface object generating unit
- 14: Application setting unit
- 20: Application
- 21: Manifest file
- 22: Setting file
- 23: Execution file
- 5: Network
- 30: Client
- 31: Input/output unit
- 32: Server interface unit
- 33: Application booting unit
- 34: Application setting unit
- 40: Application client side
- 41: Setting file
- 42: Execution file
- 50: User interface providing server
- 51: Client interface unit
- 52: User interface object generating unit
- 60: Application server side
- 61: Manifest file
- 400: Application selection menu screen
- 410: Icon
- 420: Application setting screen
- 430: Menu screen
- 440: Setting value input screen
- 441: Item defined by enum type
- 442: Item defined by array type
- 443: Line addition button
- 444: Setting save button
- 500: GUI
- 700: Language selection tab
- 800: Link to license
- 810: license information
- 811: Name registered by (K5-2)
- 812: Character string of license file

## Claims

1. An information processing device for executing application software,
the information processing device holding a user interface definition file in which a user interface for the application software is defined, for each application software,
wherein the user interface definition file is designated with an attribute of a data type for each item for defining a user interface object through which a setting item of the application software is inputted/outputted, and
the information processing device generates the user interface object at which setting of the application software is performed on the basis of the user interface definition file.

2. The information processing device according to claim 1,
wherein an input-only attribute is imparted to the item for defining the user interface object through which the setting item of the application software is inputted/outputted.

3. The information processing device according to claim 1,
wherein in the item for defining the user interface object through which the setting item of the application software is inputted/outputted, an action for processing is associated with the item for defining the user interface object.

4. The information processing device according to claim 1,
wherein in the item for defining the user interface object through which the setting item of the application software is inputted/outputted, an attribute for switching a display mode is defined.

5. The information processing device according to claim 1,
wherein in the item for defining the user interface object through which the setting item of the application software is inputted/outputted, an attribute for switching the presence or absence of display is defined.

6. The information processing device according to claim 1,
wherein in the item for defining the user interface object through which the setting item of the application software is inputted/outputted, an attribute associated with a license of the application software is defined.

7. The information processing device according to claim 1,
wherein the setting of the application software is performed by graphic display, on the basis of the user interface definition file.

8. The information processing device according to claim 1,
wherein the setting of the application software is performed by a command line, on the basis of the user interface definition file.

9. An information processing system in which a client and a server are connected by a network,
wherein the server holds a user interface definition file in which a user interface for application software is defined, for each application software,
the user interface definition file is designated with an attribute of a data type for each item for defining a user interface object through which a setting item of the application software is inputted/outputted,
the client requests generation of the user interface object from the server, and
the server generates the user interface object at which setting of the application software is performed on the basis of the user interface definition file, and transmits the user interface object to the client through the network.

10. A user interface providing method with respect to an information processing device for executing application software,
the information processing device holding a user interface definition file in which a user interface for the application software is defined, for each application software,
the user interface definition file being designated with an attribute of a data type for each item for defining a user interface object through which a setting item of the application software is inputted/outputted, the method comprising
a step of allowing the information processing device to generate the user interface object at which setting of the application software is performed on the basis of the user interface definition file.
